# EUROPÄISCHE PATENTANMELDUNG

(11) **EP 4 616 724 A1**
(43) Veröffentlichungstag der Anmeldung: **17.09.2025**
(21) Anmeldenummer: 25161522.5
(22) Anmeldetag: 04.03.2025
(51) Int. Cl.: A23L 13/74

(54) **VERFAHREN ZUR VEREDELUNG VON FRISCHFLEISCH**

(30) Priorität: 13.03.2024 CH 274202024
(71) Anmelder: Swiss Mushroom Design Lab AG, 8142 Uitikon Waldegg (CH)
(72) Erfinder: Aarab, Philipp, 8810 Horgen (CH); Aarab, Yves, 8037 Zürich (CH)
(74) Vertreter: Prins Intellectual Property AG

(57) **Zusammenfassung**

Die vorliegende Erfindung betrifft ein Verfahren zur Veredelung von Frischfleisch, wobei der Pilz Cordyceps Militaris oder Cordyceps Sinensis während der Reifung des Fleisches zum Frischfleisch zugegeben wird und das Fleisch mindestens drei Tage gelagert wird.

## Beschreibung

### Technisches Gebiet

Die Erfindung betrifft ein Verfahren zur Veredelung von Frischfleisch.

### Stand der Technik

Verfahren zur Fleischreifung und zum Veredeln von Fleisch sind bekannt. Beim "Wet-aging" wird das Frischfleisch nach der Schlachtung vom Knochen gelöst und zur Fleischreifung vakuumverpackt. Bei diesem Verfahren kann kein Wasser aus dem Fleisch verdunsten, so dass das Fleisch während der Reifung praktisch kein Gewicht verliert, was wirtschaftlich vorteilhaft ist. Nach einer bestimmten Lagerzeit wird das Fleisch aus der Vakuumverpackung entnommen und kann zum Verkauf angeboten werden. Beim "Dry-aging", auch Trockenreifung genannt, wird das Frischfleisch nicht vom Knochen gelöst und nicht vakuumverpackt, was eine qualitativ hochwertige Fleischreifung ermöglicht. Die während der Lagerung nicht entfernten Knochen verleihen dem Fleisch ein reicheres Aroma. Der Nachteil des Dry-aging ist der Gewichtsverlust des Fleisches durch die Kaltverdunstung des im Fleisch enthaltenen Wassers. Ein weiterer Nachteil des Dry-aging ist, dass das Fleisch angetrocknete Oberflächen ausbildet, die abgeschnitten werden müssen, was zu einem weiteren Gewichtsverlust führt. Gegenüber dem Wet-aging hat das Dry-aging den Vorteil, dass das Fleisch ein verbessertes Aroma aufweist, z. B. durch den am Fleisch verbleibenden Knochen und da die Aromastoffe im Fleisch durch den Wasserverlust konzentriert werden. Die beiden bekannten Verfahren haben Nachteile in Bezug auf Gewichtsverlust, Aromastoffe und Zartheit des Fleisches.

Bei weiteren bekannten Verfahren werden eine Schimmelpilzart, z.B. Penicillium oder Thamnidium, verwendet, um Frischfleisch zu besiedelnd und den Geschmack von Frischfleisch zu intensivieren. Solche Verfahren sind beispielsweise in WO 2011/161028A1, WO 2012/146564A1 oder WO 2012/146566A1 beschrieben. US3128191A und GB875339A offenbaren ein Verfahren zur beschleunigten Fleischreifung und zur Geschmacksverbesserung des Fleisches durch die Verwendung des Schimmelpilzes Thamnidium elegans. Nachteilig bei der Verwendung von Schimmelpilz ist, dass das Fleisch nach Ablauf der Lagerzeit an der Oberfläche eine Kruste aufweist, welche vollständig vom Schimmelpilz bedeckt ist. Der Schimmelpilz produziert Aflatoxine, welche nicht zum Verkehr geeignet sind. Somit muss nach Ablauf der Lagerzeit die ganze Kruste grosszügig entfernt und entsorgt werden und es kann nur ein kleiner Teil des behandelten Fleisches zur Weiterverarbeitung verwendet werden. Die Nahrungsmittelverschwendung ist entsprechend gross. Zudem wirken sich die bekannten Verfahren nur auf die beschleunigte Fleischreifung und die Geschmacksverbesserung aus, verändern aber die Qualität und insbesondere die Textur des Fleisches nicht zusätzlich. Keines der bekannten Verfahren verändert die Faserigkeit des Fleisches.

### Aufgabe der Erfindung

Aufgabe der vorliegenden Erfindung ist daher, ein Verfahren zur Veredelung von Frischfleisch und ein Verfahren zur Herstellung von veredeltem Fleisch bereitzustellen, mit welchem die Textur, wie beispielsweise die Zartheit, des Fleisches verbessert werden und so zuvor nicht verkaufbares und faseriges Fleisch veredelt und als Edelfleisch verkaufbar gemacht werden kann. Zusätzlich ist es die Aufgabe der vorliegenden Erfindung, ein Verfahren bereitzustellen, welches den Geschmack des Fleisches nach Wunsch zu verändert. Zudem soll mit dem Verfahren zur Veredelung von Frischfleisch das ganze Fleisch verwendet und Foodwaste verhindert werden können.

### Beschreibung der Erfindung

Diese Aufgabe wird mit einem Verfahren zur Veredelung von Frischfleisch gelöst, wobei der Pilz Cordyceps Militaris oder Cordyceps Sinensis während der Reifung des Fleisches zum Frischfleisch zugegeben wird und das Fleisch mindestens drei Tage gelagert wird. Vorzugsweise werden die Pilzhyphen beziehungsweise das Pilzmyzel des Cordyceps Militaris oder Cordyceps Sinensis zum Frischfleisch gegeben.

Unter Frischfleisch, auch frisches Fleisch genannt, wird nicht weiterverarbeitetes Fleisch von frisch geschlachteten Tieren verstanden. Nach der Schlachtung wird das Frischfleisch einer Fleischreifung unterzogen, wobei die Reifung des Fleisches nach dem erfindungsgemässen Verfahren erfolgt und gelagert, beziehungsweise abgehangen wird. Als Frischfleisch, welches mit dem erfindungsgemässen Verfahren veredelt werden kann, wird vorzugsweise Rind-, Kalb-, Schweine-, Lamm-, Geflügel- oder Pferdefleisch verwendet. Besonders bevorzugt wird veredeltes Rindfleisch hergestellt. Das erfindungsgemässe Verfahren ist besonders geeignet, um die Textur des Fleisches zu verändern und qualitativ minderwertiges oder sehr faseriges Fleisch, wie beispielsweise Jungbullenfleisch, welches nicht verkauft werden kann, zu veredeln und verkaufbar zu machen. Aber auch bereits hochwertiges Fleisch kann zusätzlich veredelt werden. Dies ist ein grosser Unterschied zu den herkömmlichen Verfahren zur Veredelung von Fleisch. Bei den herkömmlichen Verfahren konnte zwar der Geschmack verbessert oder das Fleisch zarter gemacht werden. Aber es war nicht möglich, aus nicht verkaufbarem Fleisch wie beispielsweise dem faserigen Jungbullenfleisch, verkaufbares Edelfleisch herzustellen, welches im Geschmack und in der Zartheit nicht von einem Edelfleischstück wie beispielsweise einem Filet unterschieden werden kann, wie das mit dem erfindungsgemässen Verfahren der Fall ist.

Die Pilze Cordyceps Militaris und Cordyceps Sinensis gehören zu den Schlauchpilzen. Diese Pilze sind auch als Heilpilze bekannt, beispielsweise zur Stärkung der Kondition und Leistungsfähigkeit, sowie des Immunsystems. Es war bisher aber nicht bekannt, dass diese Pilze zur Fleischveredelung beitragen können. Die Verwendung von Cordyceps Militaris oder Cordyceps Sinensis zur Fleischveredelung und Fleischreifung hat den Vorteil, dass diese Pilze das Fleisch optimal besiedeln. Die Pilzhyphen, beziehungsweise das Pilzmyzel, des Cordyceps Militaris oder Cordyceps Sinensis dringen in das Fasergewebe des Fleisches ein und verändert die Faserigkeit des Fleisches. Das Resultat ist ein zarteres und geschmackvolleres Fleisch, welches um mindestens eine Fleisch-Wertungsklasse höher bewertet wird als vor der Besiedelung mit Cordyceps Militaris oder Cordyceps Sinensis. Dadurch kann Fleisch, welches für den Verzehr in Europa kaum verwendet werden konnte, vertriebsfähig gemacht werden. Ebenfalls ein Vorteil ist, dass bei der Verwendung von Cordyceps Militaris oder Cordyceps Sinensis zur Veredelung von Fleisch das ganze Fleisch verwendet und verzehrt werden kann. Weil der Cordyceps Militaris und Cordyceps Sinensis Pilz im Gegensatz zum Schimmelpilz nicht gesundheitsschädlich ist, muss vor dem Verzehr nichts weggeschnitten werden, wie es im Gegenzug bei herkömmlichen Verfahren mit Schimmelpilzen der Fall ist. Es findet somit keine Lebensmittelverschwendung statt. Die Pilze Cordyceps Militaris und Cordyceps Sinensis können sogar gegebenenfalls zum Wohlbefinden beitragen.

Der Pilz Cordyceps Militaris oder Cordyceps Sinensis wird vorzugsweise in flüssiger Form, vorzugsweise in einer flüssigen Nährstofflösung, während der Reifung des Fleisches zum Frischfleisch zugegeben und auf die Oberfläche des Fleisches aufgetragen oder in das Fleisch eingespritzt. Dazu wird vorzugsweise eine Zellsuspension aus Pilzhyphen beziehungsweise aus dem Pilzmyzel des Cordyceps Militaris oder Cordyceps Sinensis in der Nährstofflösung verwendet. Die Gesamtheit der Pilzhyphen wird Pilzmyzel genannt. Das heisst, das Pilzmyzel besteht aus einer Vielzahl von Pilzhyphen.

Das erfindungsgemässe Verfahren umfasst vorzugsweise folgende Schritte: (a) Kultivieren von Pilzhyphen des Cordyceps Militaris oder Cordyceps Sinensis in einer Nährstofflösung, wodurch ein Pilzmyzel gebildet wird; (b) Zugeben des in Schritt (a) gebildeten Pilzmyzels des Cordyceps Militaris oder Cordyceps Sinensis zum Frischfleisch während der Reifung des Fleisches; (c) Lagern des mit dem Pilzmyzel des Cordyceps Militaris oder Cordyceps Sinensis gemäss Schritt (b) behandelten Frischfleisches.

In einem ersten Schritt (a) wird vorzugsweise ein Pilzmyzel des Pilzes Cordyceps Militaris oder Cordyceps Sinensis gebildet, indem Pilzhyphen des Cordyceps Militaris oder Cordyceps Sinensis in einer Nährstofflösung kultiviert werden. Die Nährstofflösung ist vorzugsweise eine zuckerhaltige Nährstofflösung und enthält vorzugsweise 3 bis 5 Gew.-% Nährstoff, bezogen auf das Gesamtgewicht der Nährstofflösung. Vorzugsweise wird als Nährstoff Sorghum Sirup, Honig, Malz Sirup, Yukon Sirup, Agaven Sirup und/oder Reis Sirup gewählt und in Wasser, vorzugsweise in destilliertem Wasser unter Hitze homogenisiert, wodurch die Nährstofflösung gebildet wird. Nach Abkühlen werden die Pilzhyphen des Cordyceps Militaris oder Cordyceps Sinensis zu dieser Nährstofflösung eingebracht. Die Pilzhyphen des Cordyceps Militaris oder Cordyceps Sinensis werden in Schritt (a) während 3 bis 30 Tage bei 5 bis 25 °C inkubiert. In dieser Zeit wachsen Pilzhyphen in der Nährstofflösung und es wird ein Pilzmyzel des Cordyceps Militaris oder Cordyceps Sinensis gebildet, welches in der Nährstofflösung schwimmt.

In einem zweiten Schritt (b) wird vorzugsweise das in Schritt (a) gebildete Pilzmyzel des Cordyceps Militaris oder Cordyceps Sinensis zum Frischfleisch gegeben während der Reifung des Fleisches. Die Nährstofflösung, welche zum Frischfleisch zugegeben wird, umfasst also das aus Pilzhyphen bestehende Pilzmyzel des entsprechenden Pilzes. Vorzugsweise wird das Pilzmyzel des Cordyceps Militaris oder Cordyceps Sinensis in Schritt (b) in einer Menge von mindestens 0.04 mg Trockengewicht des Pilzmyzels pro 1 ml Nährstofflösung zum Frischfleisch zugegeben.

Unter behandeln oder zugeben wird einmassieren, aufspritzen, auftragen, einlegen oder einspritzen verstanden. Besonders bevorzugt wird die Pilzmyzel/Nährstofflösung auf das zu veredelnde Frischfleischstück einmassiert oder aufgespritzt. Das Behandeln des Frischfleisches wie hier angegeben wird auch als Beimpfen bezeichnet.

Vorzugsweise wird entweder Cordyceps Militaris oder Cordyceps Sinensis zur Fleischveredelung verwendet. Bevorzugt ist also die getrennte Verwendung von entweder Cordyceps Militaris oder Cordyceps Sinensis. In einer weiteren Ausführungsform können die Pilze Cordyceps Militaris oder Cordyceps Sinensis, insbesondere die Pilzhyphen in der Nährstofflösung, mit Pilzhyphen von aromatischen Pilzen wie Morcheln oder Trüffeln vermischt werden zur Veränderung des Geschmacks. Die vorliegende Erfindung betrifft also zusätzlich ein Verfahren, welches den Geschmack des Fleisches nach Wunsch zu verändert, und ihm beispielsweise ein Aroma nach Morcheln oder Trüffeln verleiht.

Der Pilz Cordyceps Militaris oder Cordyceps Sinensis wird normalerweise innerhalb von 3 Tagen nach der Schlachtung zugegeben, vorzugsweise innerhalb von 2 Tagen nach der Schlachtung. Der Pilz kann notfalls noch bis zu 14 Tagen nach der Schlachtung zugegeben werden. Um insbesondere das Wachstum von Bakterien zu verhindern und eine ausreichend lange Einwirkzeit des Pilzes auf das Fleisch zu erreichen, wird ein Zugeben innerhalb von 2 bis 3 Tagen nach der Schlachtung bevorzugt. Die Menge des zugegebenen Pilzes hängt vom Gewicht, bzw. Volumen des zu behandelnden Fleisches sowie von der gewünschten Reifezeit ab. Je mehr Pilzmyzel verwendet wird, desto schneller ist der Reifeprozess.

Vorzugsweise wird das Frischfleisch nach dem erfindungsgemässen Verfahren zur Reifung des Fleisches bei einer relativen Luftfeuchtigkeit von 15 bis 85 % gelagert während einer Dauer von mindestens drei Tage, vorzugsweise mindestens 10 Tage, noch mehr bevorzugt mindestens 21 Tage bis höchstens 365 Tage. Besonders bevorzugte Resultate werden erzielt, wenn das Frischfleisch während mindestens 21 Tagen gelagert wird. Vorzugsweise wird das Fleisch in einem Dryage Prozess, d.h. einem Trockenreifungsverfahren gereift und gelagert. In dieser Zeit wird das Fleisch vom Pilz bzw. den Pilzhyphen besiedelt und es bilden sich Pilzmyzelien.

Vorzugsweise wird das Fleisch an der Luft, d.h. aerob, bei einer Temperatur zwischen 5°C bis 30°C gelagert. Besonders bevorzugt findet die Reifung und Lagerung des Fleisches bei einer Temperatur zwischen 15°C und 25 °C statt.

Das Frischfleisch wird bei den hier angegebenen bevorzugten Lagerbedingungen von den Pilzhyphen, also dem Pilzmyzel, des Cordyceps Militaris oder Cordyceps Sinensis durchwachsen, indem der Pilz in das Fasergewebe des Fleisches eindringt und die Faserigkeit des Fleisches verändert, was zu einer aussergewöhnlichen Qualität des mit dem erfindungsgemässen Verfahren veredelten Fleisches führt.

Das erfindungsgemässe Verfahren zur Veredelung von Frischfleisch kann zur Herstellung von veredeltem Fleisch verwendet werden.

Des Weiteren betrifft die vorliegende Erfindung die Verwendung von Cordyceps Militaris oder Cordyceps Sinensis zur zur Veredelung von Frischfleisch und zur Herstellung von veredeltem Fleisch, vorzugsweise nach einem erfindungsgemässen Verfahren.

Ein weiterer Gegenstand der vorliegenden Erfindung ist Edelfleisch umfassend den Pilz Cordyceps Militaris oder Cordyceps, wobei das Fleisch vom Pilzmyzel des Cordyceps Militaris oder Cordyceps Sinensis durchwachsen ist. Vorzugsweise ist das Edelfleisch hergestellt nach einem erfindungsgemässen Verfahren.

### Ausführungsbeispiele der Erfindung

Die vorliegende Erfindung wird im Folgenden durch Ausführungsbeispiele näher beschrieben, die jedoch den Schutzumfang der erfindungsgemässen Gegenstände nicht limitieren.

### Kultivierung der Pilze und Herstellung der Flüssignährstofflösung mit Pilzhyphen

Als erstes erfolgt die Kultivierung der Pilze. Zur Herstellung der Flüssignährstofflösung wird destilliertes Wasser (vorzugsweise 95 - 97 Gew.-% bezogen auf das Gesamtgewicht der Nährstofflösung) mit einem zuckerhaltigen Nährstoff (vorzugsweise 3 - 5 Gew.-% bezogen auf das Gesamtgewicht der Nährstofflösung) in einem Mischverhältnis von 95 zu 5 bis 97 zu 3 jeweils bezogen auf das Gesamtgewicht der Nährstofflösung unter Hitze homogenisiert. Als Nährstoff für die Nährstofflösung wird Sorghum Sirup, Honig, Malz Sirup, Yukon Sirup, Agaven Sirup und/oder Reis Sirup gewählt.

Die Nährstofflösung wird auf 15-25° Celsius abgekühlt. Anschliessend werden die Pilzhyphen des Cordyceps militaris oder Cordyceps sinensis in der Nährstofflösung eingebracht. Diese Nährstoff/Pilzhyphen Mischung wird anschliessend für 3 bis 30 Tage bei einer Temperatur zwischen 5 - 25°Celsius inkubiert. In dieser Zeit wachsen die Pilzhyphen in der Nährstofflösung und bilden ein Pilzmyzel, welches in der Nährstofflösung schwimmt.

### Behandeln von Frischfleisch

Die Nährstofflösung, welche das Pilzmyzel mit den Pilzhyphen enthält, wird in einem nächsten Schritt auf das Frischfleisch, beispielsweise auserwählte Fleischstücke oder Rinderhälften, vorzugsweise durch Einmassieren, Aufspritzen oder Einspritzen, zugegeben. Vorzugsweise wird das Pilzmyzel in einer Menge von mindestens 0.04 mg Trockengewicht des Pilzmyzels pro 1 ml Nährstofflösung zum Frischfleisch zugegeben. Die Menge hängt vom Gewicht, bzw. Volumen des zu behandelnden Fleisches sowie von der angepeilten Reifezeit ab. Je mehr verwendet wird, desto schneller ist der Reifeprozess.

### Reifung und Lagerung

Das Frischfleisch wird zur Fleischreifung nach dem erfindungsgemässen Verfahren offen gelagert. Das Frischfleisch ist somit nicht verpackt. Zur Lagerung kann der Knochen am Frischfleisch belassen werden, um ein besonders vorteilhaftes Aroma zu erlangen, oder auch abgelöst werden. Das erfindungsgemässe Verfahren zur Behandlung des Fleisches mit dem Pilz Cordyceps militaris oder Cordyceps sinensis verändert die Textur, insbesondere die Faserigkeit, des Fleisches und erhöht die Zartheit und die Saftigkeit des Fleisches.

Zur Reifung und Lagerung wird das zu behandelnde Fleisch oder werden die gewählten Fleischstücke, welche mit dem Pilz Cordyceps militaris oder Cordyceps sinensis behandelt wurden, in einem Trockenlagerungsverfahren bei einer relativen Luftfeuchtigkeit von 15-85 und bei einer Temperatur von 15°C bis 25°C, vorzugsweise 15°C, für eine Dauer von 21 Tagen gereift und vom Pilz besiedelt. Während dieses Prozesses wird das Fleisch vom Pilzmyzel durchwachsen und wird durch den Pilz zarter, geschmackvoller und in der Konsistenz feiner.

### Resultate

Es wurden 15 Fleischverkostungen mit jeweils 35 Testprobanden durchgeführt. Einerseits wurde Färsenfleisch, d.h. Fleisch von einem geschlechtsreifen weiblichen Rind, welches noch nicht gekalbt hat, genommen und nach dem erfindungsgemässen Verfahren mit Cordyceps Militaris oder Cordyceps Sinensis behandelt, und mit Edelfleisch von den besten Filetstücken aus Argentinien, den USA und Japan verglichen. Alle Fleischstücke wurde gebraten und den Testpersonen zur Verkostung gegeben. 98% der Testkonsumenten bevorzugten das nach dem erfindungsgemässen Verfahren behandelte Färsenfleisch vor den importierten Filetstücken.

Bei weiteren 10 Blindverkostungen mit 5 Probanden zeigte sich, dass die Konsistenz des Fleisches, welches nach dem erfindungsgemässen Verfahren behandelt wurde, um ein Vielfaches zarter und der Geschmack voller war.

## Patentansprüche

1. Verfahren zur Veredelung von Frischfleisch, **dadurch gekennzeichnet, dass** der Pilz Cordyceps Militaris oder Cordyceps Sinensis während der Reifung des Fleisches zum Frischfleisch zugegeben wird und das Fleisch mindestens drei Tage gelagert wird.

2. Verfahren nach Anspruch 1, **gekennzeichnet durch** folgende Schritte:
(a) Kultivieren von Pilzhyphen des Cordyceps Militaris oder Cordyceps Sinensis in einer Nährstofflösung, wodurch ein Pilzmyzel gebildet wird;
(b) Zugeben des in Schritt (a) gebildeten Pilzmyzels des Cordyceps Militaris oder Cordyceps Sinensis zum Frischfleisch während der Reifung des Fleisches;
(c) Lagern des mit dem Pilzmyzel des Cordyceps Militaris oder Cordyceps Sinensis gemäss Schritt (b) behandelten Frischfleisches.

3. Verfahren nach einem der vorhergehenden Ansprüche, **dadurch gekennzeichnet, dass** das Fleisch bei einer relativen Luftfeuchtigkeit von 15 bis 85 % gelagert wird.

4. Verfahren nach einem der vorhergehenden Ansprüche, **dadurch gekennzeichnet, dass** das Fleisch für eine Dauer von mindestens drei Tagen, vorzugsweise mindestens 21 Tage, gelagert wird.

5. Verfahren nach einem der vorhergehenden Ansprüche, **dadurch gekennzeichnet, dass** das Fleisch aerob bei einer Temperatur zwischen 5°C bis 30°C, vorzugsweise 15°C bis 25°C, gelagert wird.

6. Verfahren nach einem der vorhergehenden Ansprüche, **dadurch gekennzeichnet, dass** der Pilz Cordyceps Militaris oder Cordyceps Sinensis in einer Menge von mindestens 0.04 mg Trockengewicht des Pilzmyzels pro 1 ml Nährstofflösung zum Frischfleisch zugegeben wird.

7. Verfahren nach einem der vorhergehenden Ansprüche, **dadurch gekennzeichnet, dass** der Pilz Cordyceps Militaris oder Cordyceps Sinensis auf die Fleischstücke einmassiert, aufgespritzt, aufgetragen, eingelegt oder eingespritzt wird.

8. Verfahren nach einem der Ansprüche 2 bis 7, **dadurch gekennzeichnet, dass** die Nährstofflösung in Schritt (a) eine zuckerhaltige Nährstofflösung ist und als Nährstoff Sorghum Sirup, Honig, Malz Sirup, Yukon Sirup, Agaven Sirup und/oder Reis Sirup homogenisiert in Wasser enthält.

9. Verfahren nach einem der Ansprüche 2 bis 8, **dadurch gekennzeichnet, dass** die Pilzhyphen in Schritt (a) während 3 bis 30 Tage bei 5 bis 25 °C in der Nährstofflösung kultiviert werden.

10. Verfahren nach einem der vorhergehenden Ansprüche, **dadurch gekennzeichnet, dass** das als Fleisch Rind-, Kalb-, Schweine-, Lamm-, Geflügel- oder Pferdefleisch verwendet wird.

11. Verfahren nach einem der vorhergehenden Ansprüche, **dadurch gekennzeichnet, dass** die Pilzhyphen des Cordyceps Militaris oder Cordyceps Sinensis vor dem Zugeben zum Frischfleisch mit Pilzhyphen von Morcheln oder Trüffeln vermischt werden.

12. Verwendung von Cordyceps Militaris oder Cordyceps Sinensis zur Veredelung von Frischfleisch.

13. Verwendung nach Anspruch 13, **dadurch gekennzeichnet, dass** das Frischfleisch nach einem Verfahren nach einem der Ansprüche 1 bis 11 behandelt ist.

14. Edelfleisch umfassend den Pilz Cordyceps Militaris oder Cordyceps, **dadurch gekennzeichnet, dass** das Fleisch vom Pilzmyzel des Cordyceps Militaris oder Cordyceps Sinensis durchwachsen ist.

15. Edelfleisch nach Anspruch 14, **dadurch gekennzeichnet, dass** das Edelfleisch nach einem Verfahren nach einem der Ansprüche 1 bis 11 hergestellt ist.
